# EUROPÄISCHE PATENTSCHRIFT

(11) **EP 0 440 757 B1**
(45) Veröffentlichungstag und Bekanntmachung des Hinweises auf die Patenterteilung: **21.04.1993**
(21) Anmeldenummer: 90910547.0
(22) Anmeldetag: 26.07.1990
(51) Int. Cl.: F02D 41/14, G01N 27/416

(54) **VERFAHREN UND VORRICHTUNG ZUR ÜBERPRÜFUNG DER FUNKTIONSFÄHIGKEIT EINER ABGASSONDENHEIZUNG UND DEREN ZULEITUNGSSYSTEM**
PROCESS AND DEVICE FOR CHECKING THE OPERABILITY OF AN EXHAUST GAS PROBE HEATER AND ITS SUPPLY SYSTEM
PROCEDE ET DISPOSITIF POUR LA VERIFICATION DE LA CAPACITE DE FONCTIONNEMENT DU CHAUFFAGE D'UNE SONDE DE GAZ D'ECHAPPEMENT ET SON SYSTEME D'ALIMENTATION

(30) Priorität: 30.08.1989 DE 3928709
(43) Veröffentlichungstag der Anmeldung: 14.08.1991
(73) Patentinhaber: ROBERT BOSCH GMBH, 70442 Stuttgart (DE)
(72) Erfinder: MAYER, Rudi, D-7143 Vaihingen/Enz (DE); DENZ, Helmut, D-7000 Stuttgart 1 (DE); WILD, Ernst, D-7141 Oberriexingen (DE); FRANK, Rainer, D-7123 Sachsenheim 3 (DE)
(86) Internationale Anmeldenummer: DE9000569
(87) Internationale Veröffentlichungsnummer: WO9103636

(56) Entgegenhaltungen:
- US-A- 4 721 088
- Patent Abstracts of Japan, Band 10, Nr. 304, (M-526), 16. Oktober 1986 & JP, A, 61116043 (NISSAN MOTOR) 3. Juni 1986
- Patent Abstracts of Japan, Band 11, Nr. 388, (M-652), 18. Dezember 1987 & JP, A, 62157255 (HONDA MOTOR) 13. Juli 1987
- Patent Abstracts of Japan, Band 8, Nr. 124, (M-301), 9. Juni 1984 & JP, A, 5928046 (NISSAN) 14. Februar 1984

## Beschreibung

### Stand der Technik

Das erfindungsgemäße Verfahren und die zur Durchführung des Verfahrens angegebene Vorrichtung beziehen sich auf die Überprüfung der Funktionsfähigkeit einer Heizung für eine Abgassonde und des Zuleitungssystems für diese.

Es ist bekannt, zur Einhaltung eines bestimmten Luft/Kraftstoffverhältnisses des einer Brennkraftmaschine zugeführten Luft/Kraftstoffgemisches Regeleinrichtungen vorzusehen, die ihre Regelgröße von einer im Abgassystem der Brennkraftmaschine angeordneten Sauerstoffmeßsonde erhalten. Dabei wird diese Regelung im allgemeinen einer bekannten Gemischsteuervorrichtung, mit der die Zusammensetzung des Luft/Kraftstoffgemisches grob vorgesteuert wird, überlagert. Die Voraussetzung zum einwandfreien Funktionieren einer solchen Regeleinrichtung ist, daß auch die Sauerstoffmeßsonde einwandfrei arbeitet. Bei den bekannten Sauerstoffmeßsonden ist die Funktionsbereitschaft erst ab einer bestimmten Betriebstemperatur gewährleistet. Deshalb muff für den Kaltstart und den Warmlauf der Brennkraftmaschine bei Sonden, die durch die Abgase der Brennkraftmaschine aufgeheizt werden, eine Gemischsteuerung vorgesehen werden, die erst bei Erreichen der mit der Betriebstemperatur der Brennkraftmaschine steigenden Sondentemperatur durch die Gemischregelung ersetzt wird.

Die Betriebsbereitschaft einer Sauerstoffsonde mit ionenleitendem Festkörper kann auf verschiedene Weisen überwacht werden. So ist aus der DE-PS 23 01 354 eine Überwachungseinrichtung bekannt, bei der über einen Schwellwertschalter die von der Sauerstoffmeßsonde in betriebsbedingten kurzen Zeitintervallen abgegebenen Spannungssignale mit wechselndem Potential einem Zeitglied zugeführt werden, das infolge dieser Signale einen Schalter in einer ersten Schaltlage hält, sofern das Zeitintervall der Spannungssignale kürzer ist als die Schaltzeit des Zeitglieds. Im anderen Fall wird nach Ablauf dieser Schaltzeit der Schalter in eine zweite Schaltlage gebracht. Mit Hilfe des Schalters ist dann das Betriebsgemisch beeinflußbar oder eine Warneinrichtung schaltbar.

Diese Einrichtung hat den Nachteil, daß sie lediglich den totalen Ausfall der Sauerstoffmeßsonde erfaßt, wenn dieser aufgrund eines Defekts oder bei zu niedriger Temperatur kein Signal mehr mit wechselnder Spannung abgibt.

In der DE-PS 26 08 245 wird ein Verfahren und eine Einrichtung zur Überwachung der Betriebsbereitschaft einer Sauerstoffmeßsonde vorgestellt, die bereits die Betriebszustände mit verminderter Betriebsbereitschaft der Sauerstoffmeßsonde sicher zu erfassen in der Lage sind. In diesen Fällen kann die sonst mit Hilfe der Sonde betriebene Gemischregeleinrichtung auf eine Gemischsteuerung umgestellt und es andererseits ermöglicht werden, daß die Regeleinrichtung so früh wie möglich eingeschaltet wird. Das heißt, sobald die Sauerstoffmeßsonde ein ausreichend hohes Spannungssignal für einen sicheren Betrieb der Regeleinrichtung abgibt.

Das geschieht dadurch, daß zwei Spannungsschwellwerte entsprechend der minimalen und maximalen, von der betriebsbereiten Sonde abgegebenen Spannung festgelegt werden. Sobald die mit steigender Temperatur ansteigende resultierende Ausgangsspannung der Sauerstoffmeßsonde diese festgelegten Schwellwerte überschreitet, was von den Vergleichsvorrichtungen erfaßt wird, wird unter Zwischenschaltung eines Zeitglieds die Gemischsteuervorrichtung abgeschaltet und bei fehlender Häufigkeit des Signalwechsels pro Zeiteinheit die Gemischsteuervorrichtung wieder zugeschaltet.

Aus der europäischen Patentanmeldung EP-A2-258 543 ist ein Verfahren zur Erkennung der Betriebsbereitschaft einer Sauerstoffmeßsonde bekannt, bei dem eine genaue Messung des Innenwiderstandes der Sauerstoffmeßsonde erfolgt. Durch den anschließenden Vergleich mit einem vorgegebenen Wert ist ein Kriterium für die Betriebsbereitschaft gegeben.

Aus der DE-OS 31 17 790 ist ein Verfahren und eine Vorrichtung zur Temperaturregelung einer Abgassonde bekannt, die den temperaturabhängigen elektrischen Widerstand der Sauerstoffmeßsonde in ein Temperatursingal umwandeln und daraufhin eine Heizvorrichtung zur Beheizung der Abgassonde ansteuern. Dadurch läßt sich die Betriebstemperatur der Abgassonde auf einfache Art und Weise und ohne zusätzliche Fühler und Meßleitungen konstant halten.

Einen Gegenstand nach dem 1.Teil des unabhängigen Vorrichtungsanspruchs offenbart die JP-A-59028046.

Damit der Abgassensor seine Betriebstemperatur möglichst schnell erreicht und anschließend auch auf einer vorgegebenen Temperatur gehalten werden kann, ist die Funktionsbereitschaft der Heizung für die Abgassonde, im folgenden Sondenheizung genannt, Voraussetzung.

### Vorteile der Erfindung

Das erfindungsgemäße Verfahren mit den Merkmalen des Anspruchs 1 und die zur Durchführung des Verfahrens erforderliche Vorrichtung mit den Merkmalen des ersten Vorrichtungsanspruchs haben demgegenüber den Vorteil, daß sie die Funktionsbereitschaft der Sondenheizung überwachen ohne zusätzliche Sensoren oder Zuleitungen. Vorteilhafte Weiterbildungen und Ausgestaltungen sind Gegenstand der Unteransprüche.

Nur wenn die Sondenheizung ordnungsgemäß funktioniert, kann sichergestellt werden, daß die Abgassonde schnell ihren Betriebstemperaturbereich erreicht und während des Betriebes auch beibehält. Andernfalls erwärmt sich die Sonde in Abhängigkeit von der Abgastemperatur und -Zusammensetzung wesentlich langsamer und kann, beispielsweise im Schubbetrieb, auch wieder abkühlen. Das führt dazu, daß das Verhältnis des der Brennkraftmaschine zugeführten Luft/Kraftstoffgemisches häufiger durch Steuerungsbetrieb bestimmt wird, durch den das gewünschte Luft/Kraftstoffverhältnis nicht so genau eingehalten werden kann wie durch Regelungsbetrieb. Das hat Abgasemissionen mit einem höheren Anteil schädlicher Bestandteile zur Folge.

Wird aber durch das erfindungsgemäße Verfahren festgestellt, daß die Sondenheizung nicht funktionsbereit ist, kann das, beispielsweise durch eine Signallampe, dem Fahrer bekanntgegeben werden. So kann er entsprechende Maßnahmen zur Wiederherstellung der Funktionbereitschaft der Sondenheizung ergreifen.

Weiterhin wird die Betriebsbereitschaft der Abgassonde überprüft. Auch wenn diese nicht vorliegt, kann das dem Fahrer signalisiert werden.

Dadurch werden Forderungen der kalifornischen Umweltbehörde CARB erfüllt, die verlangt, daß der Ausfall abgasrelevanter Teile (dazu gehört die Sondenheizung) erkannt und angezeigt wird.

### Zeichnung

Ausführungsbeispiele sind in der Zeichnung dargestellt und in der folgenden Beschreibung näher erläutert.

Es zeigen
- Figur 1:: stark schematisiert in Form eines Blockschaltbildes eine mögliche Realisierungsform von elektronischen und elektrischen Regelungs- und Steuerelementen sowie Stellgliedern für den Betrieb einer Brennkraftmaschine,
- Figur 2:: das Aufwärmverhalten einer Abgassonde über der Zeit mit und ohne Sondenheizung,
- Figur 3:: den Flußplan einer ersten Version des Diagnoseverfahrens.

Beschreibung der Ausführungsbeispiele

Der Grundgedanke vorliegender Erfindung besteht darin, eine Diagnose der Heizeinrichtung einer Abgassonde, die ein Meßsignal, bevorzugt zur Regelung des Luft/Kraftstoffgemisches für eine Brennkraftmaschine, abgibt, durchzuführen. Die Diagnose beruht darauf, daß durch das Einschalten der Heizeinrichtung, die mindestens aus der Sondenheizung, Einrichtungen, die die Sondenheizung mit der nötigen elektrischen Leistung versorgen, und den dazugehörigen Zuleitungen besteht, die Abgassonde schneller erwärmt wird, als durch die alleinige Erwärmung durch die die Abgassonde umströmenden Abgase.

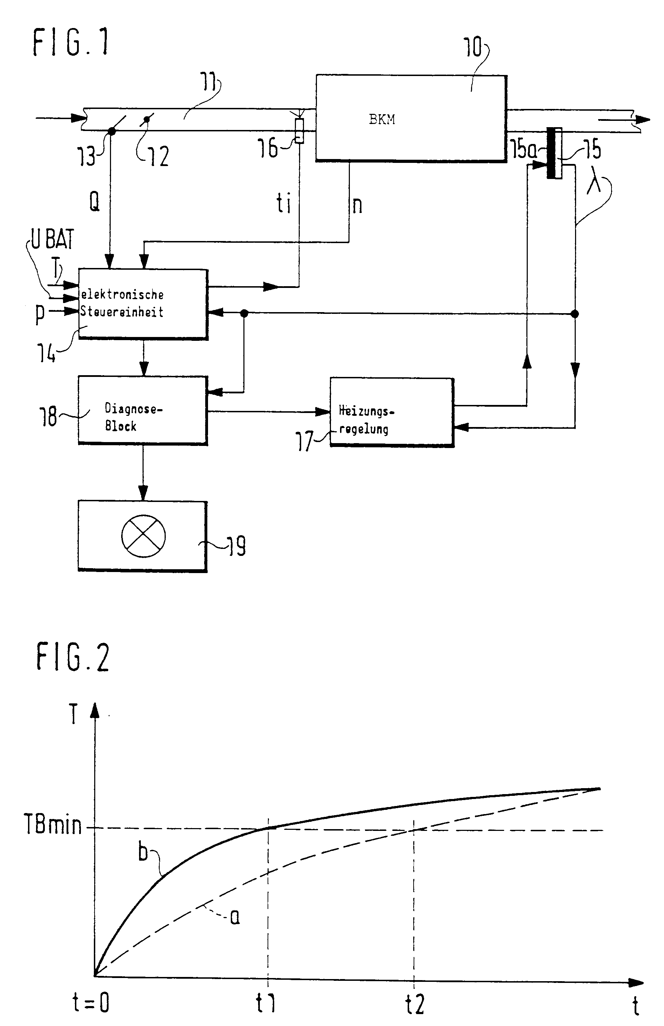

Bevor auf die Erfindung im folgenden eingegangen wird, wird ausdrücklich darauf hingewiesen, daß das in Figur 1 dargestellte, die Erfindung anhand diskreter Schaltstufen angegebene Blockschaltbild die Erfindung nicht beschränkt, sondern insbesondere dazu dient, die funktionellen Grundwirkungen der Erfindung zu veranschaulichen und spezielle Funktionsabläufe in einer möglichen Realsierungsform anzugeben. Es versteht sich, daß die einzelnen Bausteine und Blöcke in analoger, digitaler oder auch hybrider Technik aufgebaut sein können. Ferner ist es auch möglich, daß sie ganz oder teilweise zusammengefaßt, entsprechende Bereiche von programmgesteuerten digitalen Systemen, beispielsweise Mikrorechner, Mikroprozessoren, digitaler oder analoge Logikschaltungen und dergleichen umfassen können. Die im folgenden angegebene Beschreibungen sind daher lediglich als bevorzugtes Ausführungsbeispiel bezüglich des funktionellen Gesamt- und Zeitablaufs, der auch die jeweiligen besprochenen Blöcke erzielten Wirkungsweise und bezüglich des jeweiligen Zusammenwirkens der durch die einzelnen Komponenten dargestellten Teilfunktionen zu werten, wobei die Hinweise auf die jeweiligen Schaltungsblöcke aus Gründen eines besseren Verständnisses erfolgen.

In Figur 1 ist eine Brennkraftmaschine 10 dargestellt mit ihrem Ansaugbereich 11, in dem sich u. a. eine Drosselklappe 12 befindet, durch deren Auslenkung aus der Ruhestellung die Luftmenge bestimmt wird, die der Brennkraftmaschine 10 zugeführt wird. Ein Luftmengenmesser 13, der diese Luftmenge mißt, gibt ein Ausgangssignal Q an eine elektronische Steuereinheit 14, die üblicherweise ein Mikrorechner mit Mikroprozessor, zugeordnetem Speicher sowie Stromversorgung ist und weitere Betriebszustandsdaten empfängt wie
- der Drehzahl n der Brennkraftmaschine,
- dem der Brennkraftmaschine zugeführten Luft/Kraftstoffverhältnis, das durch das Ausgangssignal einer Lambdasonde 15, die im Abgaskanal der Brennkraftmaschine angeordnet ist und eine Ist-Wert-Angabe über den jeweiligen Betriebszustand der Brennkraftmaschine, genauer über den Sauerstoffgehalt im Abgas vermittelt, bestimmt wird.

Aus diesen Daten und einer Vielzahl weiterer zugeführter Informationen wie Temperatur (T), Luftdruck (p) und dergleichen (U_{BAT}, ...) erstellt die elektronische Steuereinheit 14 ein mit hoher Genauigkeit errechnetes Ausgangssignal, bei einer Kraftstoffeinspritzanlage beispielsweise einen Einspritzsteuerbefehl ti zur Ansteuerung von mit 16 im Ansaugbereich symbolisch dargestellten Einspritzventilen.

Die Abgassonde 15 ist mit einer Sondenheizung 15a ausgestattet, die von einer Heizungsregelung 17 derart mit elektrischer Leistung versorgt wird, daß die Abgassonde 15 ihre Betriebstemperatur schnell erreicht und gegebenenfalls anschließend beibehält. Als Signal für die Temperatur der Abgassonde 15 kann beispielsweise das Ausgangssignal oder der innere Widerstand der Abgassonde 15 dienen.

In einer vereinfachten Realisierung kann anstelle einer Heizungsregelung auch ein Schaltelement eingesetzt werden, durch welches die Sondenheizung bei Betrieb der Brennkraftmaschine dauernd eingeschaltet wird.

Zur Durchführung des Diagnoseverfahrens ist ferner ein Diagnoseblock 18 vorgesehen, der in Figur 1 gesondert dargestellt ist, aber auch Teil des zentralen Mikrorechners sein kann. Dieser Diagnoseblock empfängt Signale der elektronischen Steuereinheit 14 und der Abgassonde 15 und gibt Steuersignale an die Heizungsregelung 17 und Ergebnisse der Diagnose an eine Anzeigevorrichtung 19 ab. Außerdem umfaßt der Diagnoseblock 18 Speicher, in die Werte der empfangenen Signale und der von ihm ermittelten Ergebnisse abgespeichert werden können, und Vergleichsmittel, die die erforderlichen Vergleiche der Werte und Ergebnisse, auch in bezug auf ihren zeitlichen Verlauf, durchführen können.

Vom Diagnoseblock 18 kann auch eine Anzeigevorrichtung 19 angesteuert werden, die je nach dem Ergebnis der Diagnose beispielsweise Anzeigelampen aufleuchten läßt. Es versteht sich, daß diese Anzeige grundsätzlich in beliebiger Form, auch als Buchstabendisplay realisiert werden und auch Zwischenwerte der Diagnose anzeigen kann.

Bei nicht betriebsbereiter Abgassonde erhält die Heizungsregelung 17 über die elektronische Steuereinheit 14 und den Diagnoseblock 18 einen Befehl, damit die Sondenheizung 15a mit elektrischer Leistung versorgt wird.

Das Aufwärmverhalten der Abgassonde 15 ist abhängig davon, ob die Sondenheizung funktionsfähig ist oder nicht. Aus Figur 2 ist ersichtlich, wie die aus temperaturabhängigen Größen ermittelte Sondentemperatur sich ändert, wenn die Abgassonde nur durch die sie umströmenden Abgase (a) oder zusätzlich durch die Sondenheizung 15a (b) erwärmt wird.

Die in Figur 2 angegebenen Temperaturverläufe sind nur schematisch und dienen lediglich zum besseren Verständnis der vorliegenden Erfindung. Man sieht, daß bei einer Aufwärmung der Abgassonde alleine durch die die Sonde umströmenden Abgase (a) die minimale Betriebstemperatur TBmin später erreicht wird (t2), als wenn zusätzlich die Sondenheizung in Betrieb ist (t1).

Besonders sei darauf hingewiesen, daß die Zeiten t1 und t2 von Betriebsgrößen der Brennkraftmaschine abhängen, beispielsweise
- der Temperatur der Brennkraftmaschine 10 bei deren Start (t = 0),
- der Temperatur der Abgassonde 15 bei t = 0,
- der Last und der Drehzahl der Brennkraftmaschine,
- dem Luft/Kraftstoffverhältnis des der Brennkraftmaschine zugeführten Gemisches,
- der Summe der ausgegebenen Einspritzzeiten, die ein Maß für die vom Motor angegebene Abgaswärmemenge darstellt.

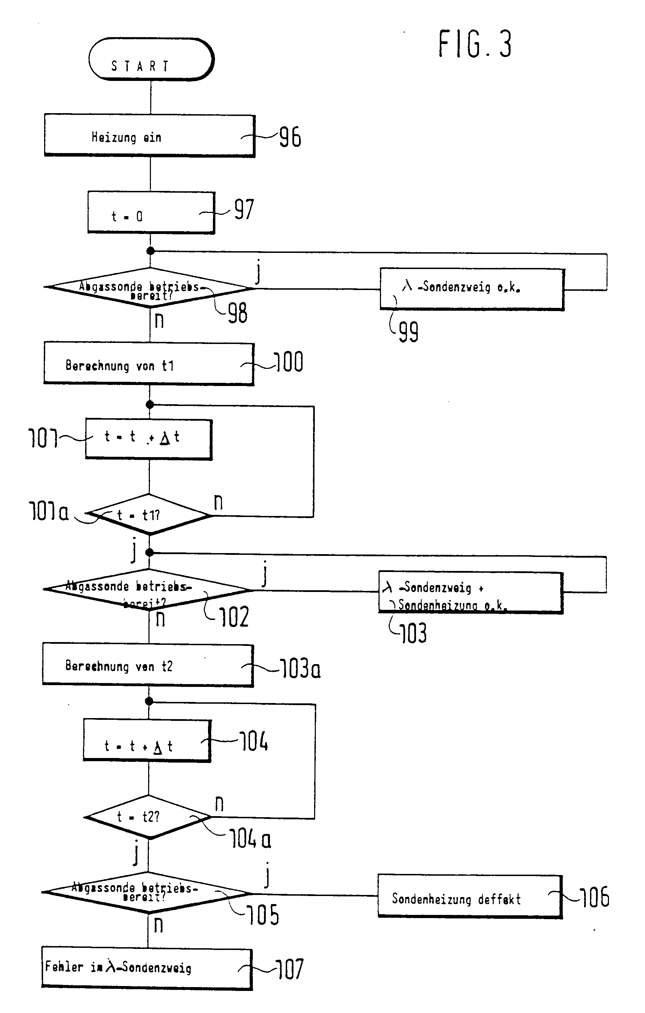

Der Ablauf des Diagnoseverfahrens wird mit Hilfe der Figur 3 erläutert.

Das erfindungsgemäße Verfahren wird immer dann gestartet, wenn die Brennkraftmaschine in Betrieb genommen wird. Nach dem Einschalten der Heizung (Schritt 96) wird der Zeitzähler gestartet (Schritt 97) und anschließend in Schritt 98 überprüft, ob die Abgassonde betriebsbereit ist. Dies kann beispielsweise dadurch geschehen, daß der Innenwiderstand der Abgassonde als Maß für die Temperatur ausgewertet wird, oder aber überprüft wird, ob das von der Abgassonde abgegebene Signal bereits Amplituden aufweist, die auf Betriebsbereitschaft schließen lassen. Ist dies der Fall, beispielsweise beim Wiederstart der Brennkraftmaschine nach kurzer Standzeit, so wird in Schritt 99 darauf geschlossen, daß das Zuleitungssystem der Abgassonde funktionsfähig ist. Das Ergebnis kann durch die Anzeigevorrichtung 19 angezeigt und/oder in dafür vorgesehenen Speichern, die im Diagnoseblock enthalten sind, abgespeichert werden.

Nach der Ausführung des Schrittes 99 führt das Verfahren erneut den Schritt 98 aus. Die aus den Schritten 98 und 99 bestehende Schleife wird so lange durchlaufen, wie die Abgassonde betriebsbereit ist.

Ist sie vom Start des erfindungsgemäßen Verfahrens an oder erst nach einiger Zeit nicht betriebsbereit, so ergibt die Abfrage in Schritt 98 "nein", und das Verfahren wird bei Schritt 100 fortgesetzt, in dem die erste vorgegebene Zeit t1 (siehe auch Figur 2) berechnet werden kann, beispielsweise aufgrund von Betriebsgrößen der Brennkraftmaschine.

In den Schritten 101 und 101a wird, durch ein Zeitglied gesteuert, gewartet, bis, ausgehend von Schritt 97 (t = 0) die erste vorgegebene Zeit t1 vergangen ist und dann erfolgt in Schritt 102, ähnlich wie in Schritt 98, eine Abfrage, ob die Abgassonde betriebsbereit ist.

Wird in Schritt 102 Betriebsbereitschaft festgestellt (ja), so wird in Schritt 103 darauf geschlossen, daß das Sondenheizsystem, die Sonde und auch ihr Zuleitungssystem funktionstüchtig sind. Das Ergebnis aus Schritt 103 kann durch die Anzeigevorrichtung 19 angezeigt und/oder in dafür vorgesehenen Speichern abgespeichert werden.

Nach der Ausführung des Schrittes 103 führt das Verfahren erneut den Schritt 102 aus. Solange die Abgassonde betriebsbereit bleibt, wird die aus den Schritten 102 und 103 bestehende Schleife durchlaufen.

Ergibt die Abfrage in Schritt 102, daß die Abgassonde plötzlich nicht mehr betriebsbereit ist, was beispielsweise durch einen Fehler im Sondenzuleitungssystem bedingt sein kann, so wird das Verfahren bei Schritt 103a fortgesetzt.

Ergibt die Abfrage in Schritt 102 "nein", so kann in Schritt 103a, ähnlich wie bei Schritt 100, die zweite vorgegebene Zeit t2 berechnet werden.

In den Schritten 104 und 104a wird, durch ein Zeitglied gesteuert, gewartet, bis, ausgehend von Schritt 97 (t = 0), die vorgegebene Zeit t2 vergangen ist. Und in Schritt 105 wird, ähnlich wie in Schritt 98, überprüft, ob die Abgassonde betriebsbereit ist oder nicht. Falls "ja", wird in Schritt 106 auf einen Defekt im Sondenheizungssystem geschlossen. Dieses Ergebnis kann angezeigt und/oder abgespeichert werden.

Die Schlußfolgerung aus Schritt 106 ist dadurch gerechtfertigt, weil die Abgassonde, deren Betriebsbereitschaft erst bei Erreichen der minimalen Betriebstemperatur vorliegt, nach einer Zeit t2, die ausreicht, um die Abgassonde allein durch die sie umgebenden Abgase aufzuheizen, diese Betriebsbereitschaft erreicht hat. Dabei muff sichergestellt werden, daß die vorgegebenen Zeiten t1, t2 so bestimmt wurden, daß die minimale Betriebstemperatur sicher erreicht werden konnte.

Ist die Abgassonde nach der vorgegebenen Zeit noch nicht betriebsbereit, so wird in Schritt 107 auf einen Fehler im λ-Sondenzweig geschlossen.

Ergänzend sei erwähnt, daß die Ergebnisse der Diagnose aus den Schritten 99, 103, 106 und 107 sowohl durch die Anzeigeeinrichtung 19 dem Fahrer angezeigt werden können und/oder in dafür vorgesehenen Speichern, die Teil des Diagnoseblockes 18 sind, abgespeichert werden können.

Ferner versteht es sich von selbst, daß die vorgegebenen Zeiten t1 und t2 natürlich nicht von einem gemeinsamen Zeitpunkt t = 0 (Schritt 97) aus gerechnet und gemessen werden müssen. Da es sich, genauer gesagt, um Zeitintervalle t1 und t2 handelt, kann jedes dieser Zeitintervalle einen anderen Bezugspunkt, beispielsweise den Beginn der jeweiligen Berechnung, haben.

Wird festgestellt, daß die Abgassonde nicht betriebsbereit ist, so ist es auch möglich, daß ein Signal abgegeben wird, durch welches die elektronische Steuereinheit von Regelungs- auf Steuerungsbetrieb umschaltet.

Der Kern des erfindungsgemäßen Diagnoseverfahrens liegt darin, daß die Funktionsfähigkeit des Sondenheizungssystems, bestehend aus der Sondenheizung 15a, der Heizungsregelung 17 und dazugehörigen Verbindungsleitungen überprüft wird. Das geschieht dadurch, daß der zeitliche Verlauf elektrischer, temperaturabhängiger Größen ausgewertet wird, die aus dem Signal der Abgassonde 15 ermittelt werden können. Dazu ist es notwendig, daß die Abgassonde durch das Sondenheizungssystem und, jedoch langsamer, durch die sie umgebenden Abgase bis auf ihre Betriebstemperatur aufgeheizt werden kann.

Diese Abgase können aus verschiedenen Verbrennungsprozessen stammen, wie sie beispielsweise beim Betrieb von Verbrennungsmotoren und Heizungsanlagen auftreten.

Dadurch wird es verständlich, daß das erfindungsgemaße Verfahren nicht auf die Überprüfung von Heizeinrichtungen für Abgassonden beschränkt ist, die zur Regelung einer Brennkraftmaschine verwendet werden. Statt dessen ist es auch möglich, Heizeinrichtungen von Sonden zu überwachen, die Abgaszusammensetzungen von Heizungsanlagen oder sonstigen chemischen oder Verbrennungsprozessen messen.

Das erfindungsgemäße Verfahren hat besonders den Vorteil, daß es unabhängig von zusätzlichen Sensoren arbeitet und dadurch kostengünstig verwirklicht werden kann.

## Patentansprüche

1. Verfahren zur Überwachung der Betriebsbereitschaft einer Abgassonde, die erst oberhalb einer vorgegebenen Temperatur betriebsbereit ist und mit einer Sondenheizung versehen ist zum schnelleren Erwärmen und zur Beibehaltung eines Betriebstemperaturbereiches, dadurch gekennzeichnet, daß nach Einschalten der Sondenheizung zu zwei aufeinanderfolgenden Zeiten t1 und t2>t1 die Betriebsbereitschaft der Sonde erfaßt wird, wobei die Zeit t1 so vorbestimmt ist, daß ohne Sondenheizung Betriebsbereitschaft in dieser Zeit nicht erreicht wird und mit Sondenheizung eine Betriebsbereitschaft erreicht wird und wobei t2 so gewählt wird, daß sowohl ohne als auch mit Sondenheizung Betriebsbereitschaft erreicht wird und daß beim Feststellen fehlender Betriebsbereitschaft nach Ablauf der vorgegebenen Zeit t1 und gegebener Betriebsbereitschaft nach Ablauf der vorgegebenen Zeit t2 auf einen Ausfall der Sondenheizung geschlossen wird und eine Diagnose bzw. Warneinrichtung aktiviert wird.

2. Verfahren zur Überwachung der Betriebsbereitschaft einer Abgassonde nach Anspruch 1, dadurch gekennzeichnet, daß die Funktionsfähigkeit der Sondenheizung und/oder des Zuleitungssystems der Abgassonde ermittelt wird durch folgende Schritte
1. Einschalten des Sondenheizungssystems
2. Abfragen, ob die Abgassonde betriebsbereit ist,
3. Ist die Abgassonde betriebsbereit, so folgt als erstes mögliches Diagnoseergebnis, daß die Abgassonde und deren Zuleitungssystem funktionsfähig sind, und es werden die Schritte 2 und 3 laufend wiederholt,
4. Falls bei Schritt 2 festgestellt wurde, daß keine Betriebsbereitschaft der Abgassonde vorliegt, aber nach einer ersten vorgegebenen Zeit t1 Betriebsbereitschaft der Abgassonde festgestellt wird, so folgt als zweites mögliches Diagnoseergebnis, daß die Abgassonde, der λ-Sondenzweig und die Sondenheizung funktionsfähig sind (und es wird Schritt 4 laufend wiederholt),
5. Falls bei Schritt 4 festgestellt wurde, daß keine Betriebsbereitschaft der Abgassonde vorliegt, wird nach einer zweiten vorgebenen Zeit t2 nochmals auf Betriebsbereitschaft der Abgassonde geprüft,
6. Liegt diese vor, so folgt als drittes mögliches Diagnoseergebnis, daß die Abgassonde und der λ-Sondenzweig funktionssfähig sind, aber fehlende Funktionsfähigkeit des Sondenheizungssystems vorliegt,
7. Andernfalls folgt als viertes mögliches Diagnoseergebnis, daß ein Fehler im λ-Sondenzweig der Sonde vorliegt,
8. Anzeigen und/oder Abspeichern mindestens eines der obengenannten möglichen Diagnoseergebnisse.

3. Verfahren nach Anspruch 1 oder 2, dadurch gekennzeichnet, daß die erste vorgegebene Zeit t1 und/oder die zweite vorgegebene Zeit t2 in Abhängigkeit von Betriebskenngrößen einer Vorrichtung berechnet werden, deren Abgaszusammensetzung ermittelt werden soll.

4. Verfahren nach einem der Ansprüche 1 bis 3, dadurch gekennzeichnet, daß die Abgassonde zur Regelung des Luft/Kraftstoffverhältnisses eines einer Brennkraftmaschine zugeführten Luft/Kraftstoffgemisches dient.

5. Verfahren nach einem der Ansprüche 1 bis 4, dadurch gekennzeichnet, daß auf die Betriebsbereitschaft der Abgassonde durch Auswerten elektrischer Größen der Abgassonde, wie beispielsweise dem Innenwiderstand, der abgegebenen Spannung und/oder dem durch die Abgassonde fließenden Strom geschlossen wird.

6. Vorrichtung zur Durchführung von Verfahren nach den Ansprüchen 1 bis 5 zur Überwachung der Betriebsbereitschaft einer Abgassonde, die erst oberhalb einer vorgegebenen Temperatur betriebsbereit ist und die mit einer Sondenheizung versehen ist zum schnelleren Erwärmen und zur Beibehaltung eines Betriebstemperaturbereichs, wobei Mittel vorgesehen sind, die
- einen Sondenheizstrom einschalten können,
- die Betriebsbereitschaft der Abgassonde ermitteln können, dadurch gekennzeichnet, daß die Mittel
- vorgegebene Zeiten t1 und t2>t1 mit tatsächlich vergangenen Zeiten vergleichen, wobei die Zeit t1 so vorbestimmt ist, daß ohne Sondenheizung Betriebsbereitschaft nicht erreicht wird und mit Sondenheizung eine Betriebsbereitschaft erreicht wird und wobei t2 so gewählt wird, daß sowohl ohne als auch mit Sondenheizung Betriebsbereitschaft erreicht wird,
- in Abhängigkeit davon, ob die Betriebsbereitschaft der Abgassonde zu Beginn oder nach Ablauf der Zeit t1 oder t2 vorliegt, auf die Betriebsbereitschaft der Sondenheizung und /oder des der Abgassonde angeschlossenen Zuleitungssystems schließen,
- Ergebnisse der Diagnose anzeigen und/oder abspeichern können.

7. Vorrichtung nach Anspruch 6, dadurch gekennzeichnet, daß Mittel vorgesehen sind, die die vorgegebenen Zeiten t1 und/oder t2 aufgrund von Betriebskenngrößen der Vorrichtung bestimmen können, deren Abgaszusammensetzung ermittelt werden soll.

## Claims

1. Method for monitoring the operational readiness of an exhaust gas probe which is only ready for operation above a specified temperature and is provided with a probe heater for more rapid heating and for maintaining an operating temperature range, characterised in that, after the probe heater has been switched on, the operational readiness of the probe is recorded at two sequential times t1 and t2 > t1, the time t1 being specified in such a way that operational readiness is not achieved without probe heating in this period and operational readiness is achieved with probe heating and the time t2 being selected in such a way that operational readiness is achieved both without and with probe heating and that on determination of a lack of operational readiness after the specified time t1 has elapsed and of given operational readiness after the specified time t2 has elapsed, it is concluded that there has been a failure of the probe heater and a diagnosis and warning device is activated.

2. Method according to Claim 1 for monitoring the operational readiness of an exhaust gas probe, characterised in that the functional capability of the probe heater and/or of the exhaust gas probe supply system is determined by means of the following steps
1. Switching on the probe heating system,
2. Interrogating whether the exhaust gas probe is ready for operation,
3. If the exhaust gas probe is ready for operation, the first possible result of the diagnosis follows, which is that the exhaust gas probe and its supply system are capable of function, and steps 2 and 3 are continuously repeated,
4. If it is found at step 2 that the exhaust gas probe is not ready for operation but operational readiness of the exhaust gas probe is found after a first specified time t1, the second possible result of the diagnosis follows, which is that the exhaust gas probe, the λ probe branch and the probe heater are capable of function (and step 4 is continuously repeated),
5. If it is found at step 4 that the exhaust gas probe is not ready for operation, the operational readiness of the exhaust gas probe is again tested after a second specified time t2,
6. If this operational readiness is present, the third possible result of the diagnosis follows, which is that the exhaust gas probe and the λ probe branch are capable of function but that the probe heating system lacks functional capability,
7. Otherwise, the fourth possible result of the diagnosis follows, which is that there is a fault in the λ probe branch of the probe,
8. Display and/or storage of at least one of the possible diagnosis results mentioned above.

3. Method according to Claim 1 or 2, characterised in that the first specified time t1 and/or the second specified time t2 are calculated as a function of operating parameters of an appliance whose exhaust gas composition is to be determined.

4. Method according to one of Claims 1 to 3, characterised in that the exhaust gas probe is used for the closed-loop control of the air/fuel ratio of an air/fuel mixture supplied to an internal combustion engine.

5. Method according to one of Claims 1 to 4, characterised in that conclusions are drawn on the operational readiness of the exhaust gas probe by analysis of electrical parameters of the exhaust gas probe, such as for example the internal resistance, the output voltage and/or the current flowing through the exhaust gas probe.

6. Appliance for carrying out methods according to Claims 1 to 5 for monitoring the operational readiness of an exhaust gas probe which is only ready for operation above a specified temperature and is provided with a probe heater for more rapid heating and for maintaining an operating temperature range, means being provided which
- can switch on a probe heating current,
- can determine the operational readiness of the exhaust gas probe,
characterised in that the means
- compare specified times t1 and t2 > t1 with actually elapsed times, the time t1 being specified in such a way that operational readiness is not achieved without probe heating and operational readiness is achieved with probe heating and the time t2 being selected in such a way that operational readiness is achieved both without and with probe heating,
- depending on whether operational readiness of the exhaust gas probe is present at the beginning of the times t1 or t2 or after they have elapsed, draw conclusions on the operational readiness of the probe heater and/or of the supply system connected to the exhaust gas probe,
- can display and/or store results of the diagnosis.

7. Appliance according to Claim 6, characterised in that means are provided which can determine the specified times t1 and/or t2 on the basis of operating parameters of the appliance whose exhaust gas composition is to be determined.

## Revendications

1. Procédé de contrôle de l'aptitude au fonctionnement d'une sonde de gaz d'échappement qui est prête à fonctionner à une température supérieure à une température prédéterminée et qui comporte un dispositif de chauffage de sonde pour être chauffé plus rapidement et pour conserver une plage de température de fonctionnement, procédé caractérisé en ce qu'après le branchement du chauffage de la sonde on détermine à deux instants successifs t1 et t2 > t1, l'aptitude au fonctionnement de la sonde, l'instant t1 étant prédéterminé pour que sans chauffage de la sonde, l'aptitude au fonctionnement ne soit pas atteinte à cet instant, mais soit atteinte avec le chauffage de la sonde et l'instant t2 étant choisi pour que l'aptitude au fonctionnement soit atteinte avec ou sans chauffage de la sonde, et en ce que lorsqu'est constaté l'inaptitude au fonctionnement, à la fin du temps prédéterminé t1 et l'aptitude au fonctionnement après le déroulement du temps prédéterminé t2, on conclut à une défaillance du chauffage de la sonde et on active un diagnostic ou un dispositif avertisseur.

2. Procédé de contrôle de l'aptitude au fonctionnement d'une sonde de gaz d'échappement selon la revendication 1, caractérisé en ce qu'on détermine l'aptitude au fonctionnement du chauffage de la sonde et/ou du système d'alimentation de la sonde par les étapes suivantes :
1. branchement du système de chauffage de la sonde,
2. interrogation pour déterminer si la sonde d'échappement est apte à fonctionner,
3. si la sonde d'échappement est prête à fonctionner, il s'ensuit un premier résultat possible de diagnostic suivant lequel la sonde d'échappement et son système d'alimentation sont aptes à fonctionner et on répète les étapes 2 et 3,
4. au cas où lors de l'étape 2 on a constaté que la sonde d'échappement n'était pas apte à fonctionner mais si l'on constate l'aptitude au fonctionnement de la sonde d'échappement après un temps déterminé t1, il s'ensuit comme deuxième résultat possible de diagnostic que la sonde d'échappement, la branche de la sonde λ et le chauffage de la sonde sont aptes à fonctionner (et cela est répété en permanence dans l'étape 4),
5. au cas où à l'étape 4 on a constaté qu'il n'y avait pas d'aptitude au fonctionnement pour la sonde d'échappement, alors, après un second temps prédéterminé t2, on contrôle une nouvelle fois l'aptitude au fonctionnement de la sonde d'échappement,
6. si cette aptitude est confirmée, il s'ensuit un troisième résultat de diagnostic, possible, suivant lequel la sonde d'échappement et la branche de la sonde λ sont aptes à fonctionner mais que le système de chauffage de la sonde est inapte à fonctionner,
7. au cas contraire, il s'ensuit un quatrième résultat possible de diagnostic suivant lequel il y a un défaut dans la branche de la sonde λ,
8. l'affichage et/ou l'enregistrement d'au moins l'un des résultats de diagnostic, possible, indiqué ci-dessus.

3. Procédé selon la revendication 1 ou 2, caractérisé en ce que le premier temps t1 prédéterminé et/ou le second temps prédéterminé t2 se fixent en fonction des paramètres de fonctionnement d'un dispositif dont on veut déterminer la composition des gaz d'échappement.

4. Procédé selon l'une des revendications 1 à 3, caractérisé en ce que la sonde d'échappement est utilisée pour réguler le rapport air/carburant d'un mélange air/carburant alimentant un moteur thermique.

5. Procédé selon l'une des revendications 1 à 4, caractérisé en ce qu'on conclut que la sonde d'échappement est apte à fonctionner en exploitant les grandeurs électriques de la sonde d'échappement, comme par exemple la résistance interne, la tension émise et/ou le courant traversant la sonde d'échappement.

6. Dispositif pour la mise en oeuvre du procédé selon les revendications 1 à 5, pour contrôler l'aptitude au fonctionnement d'une sonde d'échappement qui travaille seulement au-delà d'une température prédéterminée et qui est équipée d'un dispositif de chauffage de sonde pour chauffer plus rapidement et conserver une plage de température de fonctionnement, des moyens étant prévus qui permettent de brancher un courant de chauffage de la sonde,
- qui peuvent déterminer l'aptitude au fonctionnement de la sonde d'échappement, dispositif caractérisé en ce que l'on compare des instants prédéterminés t1 et t2 > t1 avec des durées effectivement écoulées, l'instant t1 étant déterminé pour que sans chauffage de sonde on n'atteigne pas l'aptitude au fonctionnement et qu'avec chauffage de sonde on atteigne l'aptitude au fonctionnement, et t2 étant choisi pour atteindre l'aptitude au fonctionnement avec ou sans chauffage de sonde,
- et en fonction de ce que l'aptitude au fonctionnement de la sonde d'échappement est confirmée au début ou après l'écoulement du temps t1 ou t2, on conclut à l'aptitude au fonctionnement du dispositif de chauffage de sonde et/ou du système d'alimentation relié à la sonde d'échappement,
qui enregistre et/ou affiche les résultats du diagnostic.

7. Dispositif selon la revendication 6, caractérisé par des moyens qui peuvent déterminer les temps t1 et/ou t2, fixés préalablement, sur la base de paramètres de fonctionnement du dispositif et permettent d'obtenir la composition des gaz d'échappement.
